(19) Europäisches Patentamt
European Patent Office
Office européen des brevets

(11) EP 0 493 781 B1

(12) EUROPÄISCHE PATENTSCHRIFT

(45) Veröffentlichungstag und Bekanntmachung des Hinweises auf die Patenterteilung:
**31.01.1996 Patentblatt 1996/05**

(51) Int Cl.[6]: **C09D 169/00**, C09D 171/00, C08J 7/04, C08J 5/00

(21) Anmeldenummer: **91122152.1**

(22) Anmeldetag: **23.12.1991**

(54) **Verwendung von Polyether-Polycarbonat-Blockcopolymeren als Beschichtungen für Kunststofformkörper**

Use of polyether-polycarbonate block copolymers as coatings for articles of synthetic material

Utilisation de copolymères séquencés polyéther-polycarbonate comme revêtement pour articles de matières plastiques

(84) Benannte Vertragsstaaten:
**AT DE FR GB IT NL**

(30) Priorität: **04.01.1991 DE 4100119**

(43) Veröffentlichungstag der Anmeldung:
**08.07.1992 Patentblatt 1992/28**

(73) Patentinhaber: **BAYER AG**
**D-51368 Leverkusen (DE)**

(72) Erfinder:
- **Scholl, Thomas, Dr.**
  **W-5060 Bergisch Gladbach 2 (DE)**
- **Hugl, Herbert, Dr.**
  **W-5060 Bergisch Gladbach 2 (DE)**
- **Nising, Wolfgang, Dr.**
  **W-5205 St. Augustin (DE)**

(56) Entgegenhaltungen:
**DE-A- 2 251 066**
**DE-A- 2 615 343**
**DE-A- 3 408 804**
**US-A- 4 160 791**
**US-A- 4 634 743**

Bemerkungen:
Die Akte enthält technische Angaben, die nach dem Eingang der Anmeldung eingereicht wurden und die nicht in dieser Patentschrift enthalten sind.

EP 0 493 781 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Gegenstand der vorliegenden Erfindung ist die Verwendung von bestimmten Polyether-Polycarbonat-Blockcopolymeren, gegebenenfalls in Kombination mit bis zu 30 Gew.-%, bezogen auf Gewicht Blockcopolymer, an Tensiden, als Beschichtungen für Kunststofformkörper, insbesondere für Formkörper aus Thermoplasten oder aus Duroplasten.

Als Formkörper aus Duroplasten sind hierbei nur solche im ausgehärteten Zustand zu verstehen.

Polyether-Polycarbonat-Blockcopolymere im Sinne der Erfindung sind Segmentierte, aliphatisch-aromatische Polyether-Copolycarbonate mit $\overline{M}$ w (Gewichtsmittel) von 20 000 bis 350 000, vorzugsweise 100 000 bis 250 000 (ermittelt nach der Lichtstreumethode mit dem Streulichtphotometer) mit einem Gehalt von 30 Gew.-% bis 95 Gew.-% an aromatischen Carbonatstruktureinheiten der Formel (I)

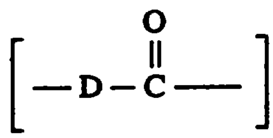

(I)

worin

D ein Diphenolatrest mit 6 bis 30 C-Atomen, vorzugsweise mit 12 bis 24 C-Atomen ist,

und mit einem Gehalt von 70 Gew.-% bis 5 Gew.-% an aliphatischen Polyethercarbonat-Struktureinheiten der Formel (II)

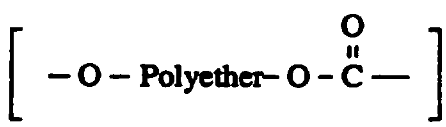

(II)

worin -O-Polyether-O- ein aliphatischer Polyetherdiol-Rest mit $\overline{M}$ n von 600 bis 20 000, vorzugsweise von 4000 bis 10 000 ist,

und worin ein Teil, bis etwa 8 Gew.-%, vorzugsweise bis etwa 4 Gew.-% der Diphenolat-Reste -D- durch $C_2$-$C_{15}$-Alkylen-diolat-Reste und/oder $C_5$-$C_6$-Cycloalkylendiolat-Reste ersetzt sein kann,

und/oder worin ein Teil, bis etwa 20 Mol-%, vorzugsweise bis etwa 10 Mol-% der Carbonat-Reste

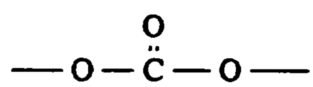

durch Terephthalat und/oder Isophthalat ersetzt sein kann,

und/oder worin ein Teil, bis etwa 10 Mol-%, vorzugsweise bis etwa 5 Mol-% der Carbonat-Reste

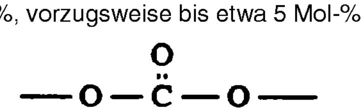

durch $C_2$-$C_{15}$-Alkylen-dicarboxylat-Reste und/oder $C_5$-$C_6$-Cycloalkylen-dicarboxylat-Reste ersetzt sein kann.

Die segmentierten, aliphatisch-aromatischen Polyether-Copolycarbonate sind bekannt (siehe beispielsweise DE-OS 2 251 066, US-PS 4 160 791, US-PS 4 075 108, US-PS 4 069 151).

Sie können beispielsweise nach dem Phasengrenzflächenverfahren aus Diphenolen HO-D-OH (III), Polyether-diphenol-carbonaten

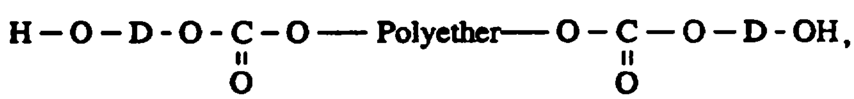

und Phosgen in bekannter Weise hergestellt werden (siehe beispielsweise DE-OS 3 408 804).

Hierbei können der entsprechende Teil der Diphenole HO-D-OH durch die $C_2$-$C_{15}$-Alkylendiole bzw. die $C_5$-$C_6$-Cy-

cloalkylendiole in Form ihrer Bischlorkohlensäureester mitverwendet werden; ebenso kann ein entsprechender Teil des Phosgens durch Terephthalsäuredichlorid, Isophthalsäuredichlorid, die $C_2$-$C_{15}$-Alkandicarbonsäuredichloride bzw. $C_5$-$C_6$-Cycloalkandicarbonsäuredichloride ersetzt werden.

Zur Regulierung der Molekulargewichte der segmentierten aliphatisch-aromatischen Polyether-Copolycarbonate können in bekannter Weise Monophenole oder aromatische Monocarbonsäurechloride in den üblichen Mengen eingesetzt werden.

Die Polyether-Copolycarbonate können linear oder in bekannter Weise, beispielsweise durch den Einbau von Triphenolen, verzweigt sein.

Erfindungsgemäß geeignete Diphenole (III) sind beispielsweise Bis-(hydroxyphenyl)-alkane, Bis-(hydroxyphenyl) -cycloalkane und -dicycloalkane, Dihydroxydiphenyle, Bis-(hydroxyphenyl)-ether, Bis-(hydroxyphenyl)-sulfone, Bis-(hydroxyphenyl)-sulfide, Bis-(hydroxyphenyl)-ketone, α,α-Bis.(hydroxyphenyl)-diisopropylbenzole sowie deren kernalkylierte Verbindungen.

Bevorzugte Diphenole (III) sind die der Formel (IV)

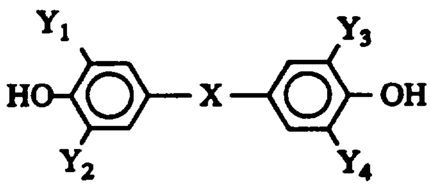

(IV)

worin

X eine Einfachbindung, Methylen, Isopropyliden, Cyclohexyliden, Sauerstoff, Schwefel, Sulfon oder Carbonyl ist,

$Y_1$ bis $Y_4$ gleich oder verschieden sind, und Wasserstoff oder $C_1$-$C_4$-Alkyl, vorzugsweise H oder Methyl bedeuten.

Beispiele für Diphenole (III) sind:

4,4'-Dihydroxydiphenyl,
2,4'-Dihydroxydiphenyl,
4,4'-Dihydroxy-3,3',5,5'-tetramethyldiphenyl,
4,4'-Dihydroxy-3,3'-dimethyldiphenylo,
Bis-(4-hydroxyphenyl)-methan,
Bis-(4-hydroxy-3,5-dimethylphenyl)-methan,
Bis-(4-hydroxyphenyl)-ethan,
2,2-Bis-(4-hydroxyphenyl)-propan ("Bisphenol A"),
2,2-Bis-(4-hydroxy-3,5-dimethylphenyl)-propan,
2,2-Bis-(4-hydroxy-3-methylphenyl)-propan,
1,1-Bis-(4-hydroxyphenyl)-cyclohexan,
1,1-Bis-(4-hydroxy-3,5-dimethylphenyl)-cyclohexan,
Bis-(4-hydroxyphenyl)-oxid,
Bis-(4-hydroxy-3,5-dimethylphenyl)-oxid,
Bis-(4-hydroxyphenyl)-keton,
Bis-(4-hydroxy-3,5-dimethylphenyl)-keton,
Bis-(4-hydroxy-3,3'-diethylphenyl)-propan,
Bis-(4-hydroxyphenyl)-sulfon,
Bis-(4-hydroxy-3,3'-dimethylphenyl)-sulfon,
Bis-(4-hydroxyphenyl)-sulfid und
Bis-(4-hydroxy-3,5-dimethylphenyl)-sulfid.

Besonders bevorzugt sind:

2,2-Bis-(4-hydroxyphenyl)-propan und
2,2-Bis-(4-hydroxy-3,5-dimethylphenyl)-propan.

Für die Herstellung der Polyetherdiphenol-carbonate geeignete aliphatische Polyetherdiole sind vorzugsweise Polyethylenglykole, wie die der Firmen Union Caride (Carbowax), British Petrol (Breox), Hoechst (Polyglykol) und Hüls

(Polywachs) mit Molekulargewichten (Zahlenmittelmolekulargewichten) von 600 bis 20 000, bevorzugt 4000 bis 10 000. Außer den genannten Polyethylenglykolen können auch andere, hydroxylgruppenhaltige Polyether, zB. Polyethylenoxid/Propylenoxid-Misch- und -Blockpolyether eingesetzt werden.

$C_2$-$C_{15}$-Alkylendiole sind beispielsweise Ethylenglykol, 1,2-Propandiol, 1,4-Butandiol, 1,6-Hexandiol, 1,8-Octandiol, 1,12-Dodecandiol und 1,2-Dihydroxidodecan; ein $C_5$-$C_6$-Cycloalkylendiol ist beispielsweise 1,4-Dihydroxycyclohexan; $C_2$-$C_{15}$-Alkandicarbonsäuredichloride sind beispielsweise Bernsteinsäuredichlorid, Adipinsäuredichlorid, Azelainsäuredichlorid, Sebazinsäuredichlorid und Dodecandicarbonsäuredichlorid; $C_5$-$C_6$-Cycloalkandicarbonsäuredichloride sind beispielsweise Hexahydroterephthaloylchlorid und Hexahydro-iso-phthaloylchlorid.

Als geeignete phenolische Kettenabbrecher sind alle üblichen Phenole, wie Phenol selbst, p-tert-Butylphenol und p-di-tert-Octylphenol, sowie monofunktionelle Polyether einsetzbar, und als aromatische Monocarbonsäurechloride Benzoesäurechlorid und Alkylbenzoesäurechlorid.

Bevorzugte Verhältnisse von Carbonatstruktureinheiten (I) zu Polyethercarbonat-Struktureinheiten (II) sind 30 Gew.-% bis 55 Gew.-% (I) zu 70 Gew.-% bis 45 Gew.-% (II), da hierbei die wasserspreitende Wirkung auch ohne Tensidzusatz gegeben ist.

Die erfindungsgemäß einzusetzenden Polyether-Copolycarbonate mit $\overline{M}$ w von 20 000 bis 350 000, vorzugsweise 100 000 bis 250 000 haben relative Lösungsviskositäten (gemessen an Lösungen von 0,5 g in 100 ml Methylenchlorid bei 25°C) zwischen 1,1 und 3,8, vorzugsweise zwischen 1,5 und 3,8.

Die Molekulargewichte $\overline{M}$ n (Zahlenmittel) der Polyetherdiole werden ermittelt durch Gelpermeationschromatographie und Hydroxylzahl.

Die erfindungsgemäßen Beschichtungen für die Kunststofformkörper sollen eine Dicke von 0,001 µm bis 20 µm haben und können aus Lösungsmitteln, aus wäßrigen Dispersionen oder, im Falle der Beschichtung von Formkörpern aus Thermoplasten, durch Coextrusion aufgetragen werden.

Gegenstand der vorliegenden Erfindung sind somit außerdem beschichtete Formkörper aus Kunststoffen, insbesondere aus Thermoplasten oder aus Duroplasten, die dadurch gekennzeichnet sind, daß sie ihrer Oberfläche mit einer 0,001 µm bis 20 µm dünnen Schicht aus den genannten Polyether-Polycarbonat-Blockcopolymeren beschichtet sind, welche gegebenenfalls bis zu 30 Gew.-%, bezogen auf Gewicht Blockcopolymer, Tensid enthält.

Durch diese Beschichtung erhalten die Kunststofformkörper eine wasserspreitende Oberfläche.

Wasserspreitende Oberflächen zeichnen sich generell dadurch aus, daß sie bei Kontakt mit Wasser auf der Oberfläche keine Wassertropfen bilden, sondern einen dünnen Wasserfilm, der die optischen Eigenschaften des Formkörpers wie z.B. Lichtstreuung, Transmission, Doppelbrechung etc. im Gegensatz zu Wassertropfen kaum beeinflußt. In diesem Sinne ergeben sich Vorteile bei der Herstellung hochwertiger optischer Teile aus Kunststoff wie Brillengläser, Visiere, Skibrillen, Verglasungen von Schwimmhallen und Gewächshäusern. Es hat daher nicht an Versuchen gefehlt, derartige wasserspreitende Beschichtungen für Kunststoffmaterialien zu entwickeln.

DE-OS 1 928 409 und 2 161 645 beschreiben Beschichtungen aus Polymerisaten von Alkylestern, Hydroxyalkylestern, Methylolethern von Methacrylamid und gegebenenfalls quartären Aminoalkylestern der Acryl- bzw. Methacrylsäure. Die Beschichtungen erweisen sich jedoch zu empfindlich gegenüber mechanischer Beanspruchung und quellen bei Benetzung auf, so daß sie ihre Haftung auf dem Untergrund verlieren.

DE-PS 2 017 002 beschreibt Kunststoffe, die geringe Mengen eines Tensid, z.B. Polyglykole, enthalten. Hier sind die erzielten Effekte für eine praktische Anwendung zu gering. Der Zusatz des Tensid führt zur Wasserquellung des Kunststoffs und damit zum vorzeitigen Abbau bei Bewitterung.

US-PS 4 576 864 beschreibt 2-schichtige wasserspreitende Beschichtungen, wobei die untere ein hydrophobes Polymer und die obere aus kolloidaler Kieselsäure gebildet wird. Nachteilig ist hier der verhältnismäßig aufwendige 2-schichtige Auftrag, der durch Beschichtungen der vorliegenden Erfindung vermieden werden kann.

Darüber hinaus bestehen die Beschichtungen der vorliegenden Erfindung aus thermoplastischem Material, so daß hier sogar eine Auftragung im Coextrusionsverfahren in Frage kommt.

Schließlich ist aus der DE-OS 1 694 273 bekannt, thermoplastische Formkörper mit verbesserten optischen Eigenschaften durch Überzüge herzustellen, wobei die thermoplastischen Formkörper aus Polyacrylat oder Polycarbonat bestehen, und die zur Beschichtung geeigneten Kunststoffe für die Polyacrylate aus Polyacrylat oder Celluloseacetatbutyrat bestehen und für die Polycarbonate aus Polycarbonat, Polyacrylat, Celluloseacetatbutyrat oder Polystyrol bestehen. Das Problem der Wasserspreitung ist in der DE-OS 1 694 273 nicht angesprochen.

In all den Fällen, in denen der Polyetheranteil in der Blockcopolymer-Schicht nur von 5 bis 45 Gew.-%, bezogen auf Gewicht Blockcopolymer, beträgt, ist die Kombination mit Tensiden erforderlich. Tenside, im Sinne der vorliegenden Erfindung sind oberflächenaktive Verbindungen; sie sollen Schutzkolloide, Dispergiermittel etc. mit einschließen. Beispiele hierfür sind Polyalkylenoxide, Alkyl- und Arylsulfonate, quartäre Ammoniumsalze, Alkyl-, Aryl- oder Ethersulfate, Polyvinylalkohole, teilverseifte Polyvinylacetate, Polyvinylpyrrolidon, Olefin/Maleinsäureanhydrid-Copolymere, Phenolsulfonsäure/Formaldehyd-Kondensate, Naphthalinsulfonsäure/-Formaldehyd-Kondensate und alkoxylierte Phenol/Formaldehyd-Kondensate.

Derartige oberflächenaktive Verbindungen sind bekannt und kommerziell erhältlich. Genauere Beschreibungen mit

Lieferantenangabe finden sich z.B, in Stache, "Tensid-Taschenbuch", Carl-Hanser-Verlag, München, Wien.

Besonders bevorzugt werden ionische Tenside wie Dodecylbenzolsulfonsäure, Polystyrolsulfonsäure, Di-i-octylphosphorsäure und deren Salze und quartäre Ammoniumverbindungen wie Dodecylbenzylammoniumchlorid u.a..

Die Menge an zugesetztem Tensid kann durchaus sehr hoch gewählt werden, jedoch wird bei Überdosierung auf die Dauer der größte Teil des Tensids durch den Wasserkontakt herausgewaschen.

Geeignete Tensid-Mengen liegen, wie bereits erwähnt, zwischen 0 Gew.-% und 30 Gew.-%, bezogen auf Gewicht der Polyether-Polycarbonat-Beschichtung. Die Menge an Tensid orientiert sich hierbei vor allem am Gewichtsanteil der Carbonat-Struktureinheiten (I) der Beschichtung bzw. am Gewichtsanteil der Polyether-Struktureinheit (II) der Beschichtung.

Des weiteren kann die Beschichtung Stabilisatoren gegen thermischen, fotochemischen oder oxidativen Abbau enthalten, wie z.B. phenolische Antioxidantien, Phosphite, Hydroxybenzophenone, Hydroxyphenylbenztriazole, Salicylate, Oxanilide, sterisch gehinderte Amine etc.. Derartige Antioxidantien sind kommerziell erhältlich und z.B. beschrieben in Gächter, Müller, "Kunststoff-Additive", Hanser-Verlag, München, Wien, 1989, Seiten 1-272.

Gegenstand der vorliegenden Erfindung ist somit auch die Verwendung der genannten Polyether-Polycarbonat-Blockcopolymeren in Kombination mit Stabilisatoren und gegebenenfalls in Kombination mit Tensiden als Beschichtungen für Kunststofformkörper.

Gegenstand der vorliegenden Erfindung sind somit auch die erfindungsgemäß beschichteten Formkörper aus Kunststoffen, die dadurch gekennzeichnet sind, daß die Schicht aus ein genannten Polyether-Polycarbonat-Blockcopolymeren zusätzlich Stabilisatoren und gegebenenfalls Tenside besteht.

Die erfindungsgemäßen wasserspreitenden Beschichtungen können, wie bereits erwähnt, z.B. mit den bekannten Techniken aus organischer Lösung aufgetragen werden. Geeignete Lösungsmittel sind z.B. 1,3-Dioxolan, 1,3-Dioxan, 1,4-Dioxan, Tetrahydrofuran, y-Butyrolacton, Acetonitril, Dimethylformamid, Methylenchlorid, Chloroform, Chlorbenzol oder Gemische dieser Lösungsmittel.

Bevorzugte Schichtdicken liegen hierbei zwischen 0,1 µm und 5 µm.

Gegenstand der vorliegenden Erfindung ist außerdem ein Verfahren zur Herstellung der beschichteten Formkörper aus Kunststoff, insbesondere aus Thermoplasten oder Duroplasten, das dadurch gekennzeichnet ist, daß man sie mit einer Lösung aus 0.9. Polyether-Polycarbonat-Blockcopolymeren und gegebenenfalls aus Tensiden und/oder Stabilisatoren beschichtet und das Lösungsmittel in bekannter Weise verdampft.

Neben der Auftragung aus Lösungsmittel können, wie bereits erwähnt, die erfindungsgemäßen hydrophilen Beschichtungen infolge ihrer thermoplastischen Eigenschaften auch durch Coextrusion aufgebracht werden. Besonders geeignete Formteile für diese Beschichtungsmethode sind beispielsweise Hohlkammerplatten oder Doppelstegplatten gemäß EP-OS 54 856. Die aufgetragene Filmdicke liegt hier bevorzugt zwischen 1 und 20 µm.

Gegenstand der vorliegenden Erfindung ist somit auch ein Verfahren zur Herstellung der beschichteten Formkörper aus Thermoplasten, das dadurch gekennzeichnet ist, daß man bei der Herstellung der Formkörper aus Thermoplasten diese mit den 0.9. Polyether-Polycarbonat-Copolymeren via Coextrusion bei Temperaturen zwischen 220°C und 320°C beschichtet.

Geeignete, mit den erfindungsgemäßen Beschichtungen auszurüstende Kunststoffe sind beispielsweise Thermoplasten, wie aromatische Polycarbonate (s. hierzu US-Pat. 3 028 365, 3 062 781 und 3 879 347), aromatische Polyester und -Polyestercarbonate (s. hierzu DE-OS 1 495 626, 2 232 877, 2 703 376, 3 000 610, 2 714 544 und 3 000 934), thermoplastische $C_1$-$C_4$-Polyalkyl-methacrylate, thermoplastische Polystyrole und Polyvinylchloride, oder Duromere aus z.B. Allyloder Diallyl-carbonaten (siehe hierzu DE-OS 3 439 935) oder (Meth)acrylaten (siehe hierzu GB 2 076 836) oder ungesättigten Polyesterharzen.

Für die erfindungsgemäße Beschichtung sind beliebige Formkörper aus Kunststoffen, insbesondere aus Thermoplasten oder aus Duroplasten geeignet.

Beispiele dafür sind

- Stegdoppelplatten und
  Massivplatten aus Thermoplasten (PC, PMMA, PS, PVC) für Verglasungen insbesondere im Gewächshausbau
- Sonnenbrillen
- Visiere für Motorradhelme
  etc.

Die Herstellung der Formkörper ist für den Kunststoffachmann geläufig, sie erfolgt bei Thermoplasten vorwiegend durch Extrusion oder Spritzguß, bei Duroplasten durch Gießen oder Pressen und anschließende Aushärtung.

Beispiel 1:

Gemäß dem Verfahren der DE-OS 3 408 804 wird ein Polyether-Copolycarbonat aus 20 Gew.-Teilen Polyethylenoxid (Mn 8000), 80 Gew.-Teilen Bisphenol A und Phosgen (Überschuß) hergestellt. Hierbei geht man so vor, daß man Bisphenol A Polyether und Natronlauge im Methylenchlorid/Wasser-Gemisch vorlegt und dann Phosgen mit 150 Mol-% Überschuß, bezogen auf Bisphenol A, einleitet. Gleichzeitig wird so viel Natronlauge zudosiert, daß ein pH-Wert von 14 konstant gehalten wird.

Die rel. Viskosität (gemessen als Lösung von 0,5 g Polymer in 100 ml Methylenchlorid bei 25°C) des erhaltenen Polyether-Copolycarbonats beträgt 2.41; $\overline{M}$ w (gemessen durch Gelpermeationschromatographie) beträgt 130 000.

Beispiel 2:

Gemäß dem Verfahren der DE-OS 3 408 804 wird ein Polyether-Copolycarbonat aus 55 Gew.-Teilen Polyethylenoxid (Mn 8000), 45 Gew.-Teilen Bisphenol A und Phosgen (Überschuß) hergestellt. Man verfährt im einzelnen hierbei wie im Beispiel 1 vorstehend beschrieben.

Die rel. Viskosität (gemessen wie im Beispiel 1 vorstehend) des erhaltenen Polyether-Copolycarbonats beträgt 2.82, $\overline{M}$ w (gemessen wie im Beispiel 1 vorstehend) beträgt 160 000.

Beispiel 3:

1,0 g des Polyether-polycarbonats gemäß Beispiel 1 und 0,2 g Dodecylbenzolsulfonsäure-Na-salz werden in 100 g 1,3-Dioxolan gelöst und anschließend filtriert. Die klare Lösung wird mittels eines Handrakels (Spaltbreite 50 µm) auf eine Polycarbonat-Platte aufgetragen und 10 Minuten bei 70°C getrocknet.

Beispiel 4:

1,0 g Polyethercarbonat gemäß Beispiel 2 werden in 100 g 1,3-Dioxolan gelöst, filtriert, und mit einem Handrakel (Spaltbreite 50 µm) auf eine Polycarbonat-Platte aufgetragen. Anschließend wird 10 Minuten bei 70°C getrocknet.

Beispiel 5:

Benetzungsverhalten:

Die beschichteten Kunststoffplatten gemäß den Beispielen 3 und 4 werden in Wasser eingetaucht. Nach dem Herausnehmen bildet sich (im Gegensatz zu einer unbeschichteten Platte) spontan eine dünne Wasserschicht aus. Auf der unbeschichteten Platten bleiben hingegen Wassertropfen zurück.

Beispiel 6:

Hydrolysestabilität:

Nach 4 Wochen Wasserlagerung bei Raumtemperatur ist der wasserspreitende Effekt bei den beschichteten Kunststoffen gemäß den Beispielen 3 und 4 unverändert vorhanden.

Beispiel 7: (Vergleichsbeispiel)

In Analogie zur DE-OS 2 017 002 wird eine Lösung von 2,5 g Polycarbonat auf Basis Bisphenol A, $\overline{M}$ w etwa 28 000, 0,125 g Polyether aus Oleylalkohol und 50 Mol Ethylenoxid in 100 g Methylenchlorid mit einem Handrakel (Spaltbreite 50 µm) auf eine Polycarbonat-Platte aufgebracht und 10 Minuten bei 40°C getrocknet.

Die beschichtete Platte wird in Wasser eingetaucht Nach dem Herausnehmen bilden sich sowohl auf der beschichteten als auch auf der unbeschichteten Seite Wassertropfen aus.

**Patentansprüche**

1. Verwendung von segmentierten, aliphatisch-aromatischen Polyether-Copolycarbonaten mit $\overline{M}$ w (Gewichtsmittel) von 20 000 bis 350 000, (ermittelt nach der Lichtstreumethode mit dem Streulichtphotometer) mit einem Gehalt von 30 Gew.-% bis 95 Gew.-% an aromatischen Carbonstruktureinheiten der Formel (I)

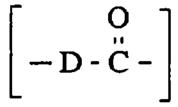 (I)

worin

D ein Diphenolrest mit 6 bis 30 C-Atomen ist,

und mit einem Gehalt von 70 Gew.-% bis 5 Gew.-% an aliphatischen Polyethercarbonat-Struktureinheiten der Formel (II)

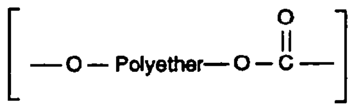 (II)

worin -O-Polyether-O- ein aliphatischer Polyetherdiol-Rest mit $\overline{M}$n von 600 bis 20 000 ist,

und worin ein Teil, bis etwa 8 Gew.-% der Diphenolat-Reste -D- durch $C_2$-$C_{15}$-Alkylen-diolat-Reste und/oder $C_5$-$C_6$-Cycloalkylendiolat-Reste ersetzt sein kann,

und/oder worin ein Teil, bis etwa 20 Mol-% der Carbonat-Reste

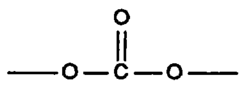

durch Terephthalat und/oder Isophthalat ersetzt sein kann,

und/oder worin ein Teil, bis etwa 10 Mol-% der Carbonat-Reste

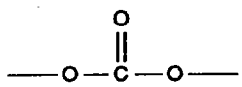

durch $C_2$-$C_{15}$-Alkylen-dicarboxylat-Reste und/oder $C_5$-$C_6$-Cycloalkylen-dicarboxylat-Reste ersetzt sein kann,

in Kombination mit bis zu 30 Gew.-%, bezogen auf Gewicht Blockcopolymer, an Tensiden, als Beschichtungen für Kunststofformkörper.

2. Verwendung gemäß Anspruch 1 als Beschichtungen für Formkörper aus Thermoplasten.

3. Verwendung gemäß Anspruch 1 als Beschichtungen für Formkörper aus Duroplasten.

4. Beschichtete Formkörper aus Kunststoffen, dadurch gekennzeichnet, daß sie an ihrer Oberfläche mit einer 0,001 µm bis 20 µm dünnen Schicht aus Polyether-Polycarbonat-Blockcopolymeren des Anspruchs 1 beschichtet sind, welche bis zu 30 Gew.-%, bezogen auf Gewicht Blockcopolymer, Tenside enthalten.

5. Beschichtete Formkörper aus Thermoplasten gemäß Anspruch 4.

6. Beschichtete Formkörper aus Duroplasten gemäß Anspruch 4.

7. Verwendung gemäß Ansprüche 1 bis 3, dadurch gekennzeichnet, daß die Polyether-Polycarbonat-Blockcopolymeren in Kombination mit Stabilisatoren eingesetzt werden.

8. Beschichtete Formkörper gemäß Ansprüchen 4 bis 6, dadurch gekennzeichnet, daß die Schicht aus Polyether-Polycarbonat-Blockcopolymeren und Tensiden zusätzlich Stabilisatoren enthält.

9. Verfahren zur Herstellung der beschichteten Formkörper der Ansprüche 4 bis 6 und 8, das dadurch gekennzeichnet

ist, daß man die Formkörper aus Kunststoff mit einer Lösung aus Polyether-Polycarbonat-Blockcopolymeren und aus Tensiden und gegebenenfalls Stabilisatoren beschichtet und das Lösungsmittel in bekannter Weise verdampft.

**10.** Verwendung von segmentierten aliphatisch-aromatischen Polyether-Copolycarbonaten mit Mw (Gewichtsmittel) von 20 000 bis 350 000 (ermittelt nach der Lichtstreumethode mit dem Streulichtphotometer) mit einem Gehalt von 30 Gew.-% bis 55 Gew.-% an aromatischen Carbonatstruktureinheiten der Formel (I)

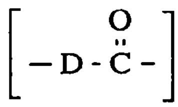

(I)

worin

D ein Diphenolrest mit 6 bis 30 C-Atomen ist,

und mit einem Gehalt von 70 Gew.-% bis 45 Gew.-% an aliphatischen Polyethercarbonat-Struktureinheiten der Formel (II)

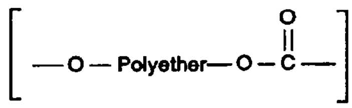

(II)

worin -O-Polyether-O- ein aliphatischer Polyetherdiol-Rest mit $\overline{M}$n von 600 bis 20 000 ist,

und worin ein Teil, bis etwa 8 Gew.-% der Diphenolat-Reste -D- durch $C_2$-$C_{15}$-Alkylen-diolat-Reste und/oder $C_5$-$C_6$-Cycloalkylendiolat-Reste ersetzt sein kann,

und/oder worin ein Teil, bis etwa 20 Mol-% der Carbonat-Reste

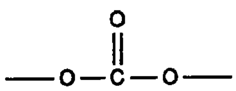

durch Terephthalat und/oder Isophthalat ersetzt sein kann,

und/oder worin ein Teil, bis etwa 10 Mol-% der Carbonat-Reste

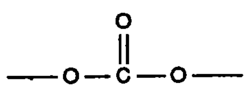

durch $C_2$-$C_{15}$-Alkylen-dicarboxylat-Reste und/oder $C_5$-$C_6$-Cycloalkylen-dicarboxylat-Reste ersetzt sein kann,

gegebenenfalls in Kombination mit bis zu 30 Gew.-%, bezogen auf Gewicht Blockcopolymer, an Tensiden, als Beschichtungen für Kunststofformkörper.

**11.** Verwendung gemäß Anspruch 10, dadurch gekennzeichnet, daß die Polyether-Polycarbonat-Blockcopolymeren in Kombination mit Stabilisatoren eingesetzt werden.

**12.** Beschichtete Formkörper aus Kunststoffen, dadurch gekennzeichnet, daß sie an ihrer Oberfläche mit einer 0,001 µm bis 20 µm dünnen Schicht aus Polyether-Polycarbonat-Blockcopolymeren des Anspruchs 10 beschichtet sind, welche gegebenenfalls bis zu 30 Gew.-%, bezogen auf Gewicht Blockcopolymer, Tenside enthalten.

**13.** Beschichtete Formkörper gemäß Anspruch 12, dadurch gekennzeichnet, daß die Schicht aus Polyether-Polycarbonat-Blockcopolymeren zusätzlich Stabilisatoren enthält.

**14.** Beschichtete Formkörper aus Thermoplasten gemäß Anspruch 12.

**15.** Verfahren zur Herstellung der Formkörper des Anspruchs 14, dadurch gekennzeichnet, daß man bei der Herstellung der Formkörper aus Thermoplasten diese mit den Polyether-Polycarbonat-Copolymeren via Coextrusion bei Temperaturen zwischen 220°C und 320°C beschichtet.

## Claims

1. The use of segmented, aliphatic-aromatic polyether copolycarbonates having weight average molecular weights ($\overline{M}w$) in the range from 20,000 to 350,000 (as determined by the light scattering method using a scattered light photometer) and containing 30% by weight to 95% by weight of aromatic carbonate structural units corresponding to formula (I):

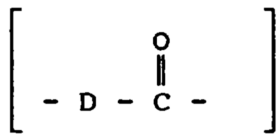

(I)

in which

D is a diphenolate moiety containing 6 to 30 carbon atoms,

and 70% by weight to 5% by weight of aliphatic polyether carbonate structural units corresponding to formula (II):

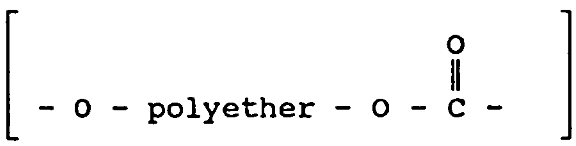

(II)

in which -O-polyether-O- is an aliphatic polyether diol moiety having an $\overline{M}n$ value of 600 to 20,000,

and in which part, i.e. up to about 8% by weight, of the diphenolate moieties -D- can be replaced by $C_{2-15}$ alkylene diolate moieties and/or $C_{5-6}$ cycloalkylene diolate moieties and/or in which part, i.e. up to about 20 mole-% , of the carbonate moieties

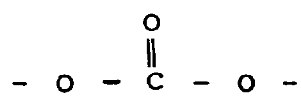

can be replaced by terephthalate and/or isophthalate

and/or in which part, i.e. up to about 10 mole-%, of the carbonate moieties

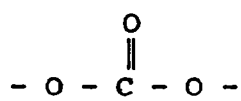

can be replaced by $C_{2-15}$ alkylene dicarboxylate moieties and/or $C_{5-6}$ cycloalkylene dicarboxylate moieties,

in combination with up to 30% by weight, based on the weight of the block copolymer, of surfactants as coatings for plastic mouldings.

2. The use claimed in claim 1 as coatings for mouldings of thermoplastics.

3. The use claimed in claim 1 as coatings for mouldings of thermosets.

4. Coated mouldings of plastics, characterized in that they are surface-coated with a 0.001 µm to 20 µm thick layer of polyether/polycarbonate block copolymers according to claim 1 containing up to 30% by weight, based on the weight of the block copolymer, of surfactants.

5. Coated mouldings of thermoplastics as claimed in claim 4.

6. Coated mouldings of thermosets as claimed in claim 4.

7. The use claimed in claims 1 to 3, characterized in that the polyether/polycarbonate block copolymers are used in combination with stabilizers.

8. Coated mouldings as claimed in claims 4 to 6, characterized in that the layer of polyether/polycarbonate block copolymers and surfactants additionally contains stabilizers.

9. A process for the production of the coated mouldings claimed in claims 4 to 6 and 8, characterized in that the plastic mouldings are coated with a solution of polyether/ polycarbonate block copolymers and surfactants and optionally stabilizers and the solvent is evaporated in known manner.

10. The use of segmented, aliphatic-aromatic polyether copolycarbonates having weight average molecular weights ($\overline{M}w$) in the range from 20,000 to 350,000 (as determined by the light scattering method using a scattered light photometer) and containing 30% by weight to 55% by weight of aromatic carbonate structural units corresponding to formula (I):

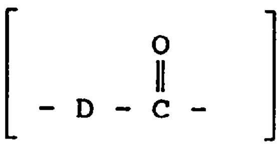

(I)

in which

D is a diphenolate moiety containing 6 to 30 carbon atoms,

and 70% by weight to 45% by weight of aliphatic polyether carbonate structural units corresponding to formula (II):

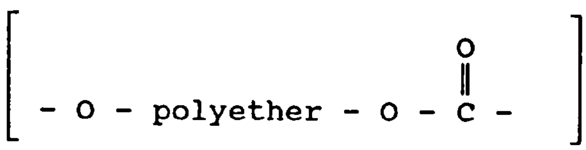

(II)

in which -O-polyether-O- is an aliphatic polyether diol moiety having an $\overline{M}n$ value of 600 to 20,000,

and in which part, i.e. up to about 8% by weight, of the diphenolate moieties -D- can be replaced by $C_{2-15}$ alkylene diolate moieties and/or $C_{5-6}$ cycloalkylene diolate moieties and/or in which part, i.e. up to about 20 mole-%, of the carbonate moieties

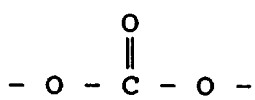

can be replaced by terephthalate and/or isophthalate

and/or in which part, i.e. up to about 10 mole-%, of the carbonate moieties

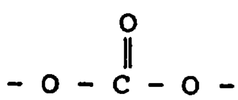

can be replaced by $C_{2-15}$ alkylene dicarboxylate moieties and/or $C_{5-6}$ cycloalkylene dicarboxylate moieties,

optionally in combination with up to 30% by weight, based on the weight of the block copolymer, of surfactants as coatings for plastic mouldings.

11. The use claimed in claim 10, characterized in that the polyether/polycarbonate block copolymers are used in combination with stabilizers.

12. Coated mouldings of plastics, characterized in that they are surface-coated with a 0.001 µm to 20 µm thick layer of polyether/polycarbonate block copolymers according to claim 10 optionally containing up to 30% by weight, based

on the weight of the block copolymer, of surfactants.

**13.** Coated mouldings as claimed in claim 12, characterized in that the layer of polyether/polycarbonate block copolymers additionally contains stabilizers.

**14.** Coated mouldings of thermoplastics as claimed in claim 12.

**15.** A process for the production of the mouldings claimed in claim 14, characterized in that, where the mouldings are produced from thermoplastics, they are coated with the polyether/polycarbonate copolymers by coextrusion at temperatures of 220°C to 320°C.

**Revendications**

**1.** Utilisation de polyéther-copolycarbonates aliphatiques-aromatiques segmentés ayant des poids moléculaires moyens, moyenne en poids Mw de 20 000 à 350 000 (déterminés par la méthode de diffraction de la lumière avec photomètre à la lumière diffractée), contenant de 30 à 95 % en poids de motifs de structure de carbonates aromatiques de formule (I)

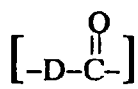

(I)

dans laquelle

D représente un radical de diphénol en $C_6$-$C_{30}$,
et 70 à 5 % en poids de motifs de structure de polyéther-carbonates aliphatiques de formule (II)

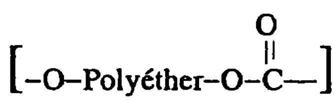

(II)

dans laquelle -O-polyéther-O- représente un radical de polyétherdiol aliphatique de poids moléculaire moyen Mn 600 à 20 000,
et dans lesquels une partie, allant jusqu'à environ 8 % en poids, des radicaux de diphénolates -D- peuvent être remplacés par des radicaux d'(alkylène en $C_2$-$C_{15}$)diolates et/ou de (cycloalkylène en $C_5$-$C_6$)diolates,
et/ou dans lesquels une partie, allant jusqu'à environ 20 mol %, des radicaux de carbonates

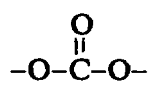

peuvent être remplacés par des radicaux de téréphtalate et d'isophtalate,
et/ou dans lesquels une partie, jusqu'à environ 10 mol%,des radicaux de carbonates

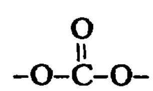

peuvent être remplacés par des radicaux d'(alkylène en $C_2$-$C_{15}$)dicarboxylates et/ou de (cycloalkylène en $C_5$-$C_6$)dicarboxylates,
en combinaison avec des proportions allant jusqu'à 30 % en poids, par rapport au poids du copolymère séquencé, d'agents tensioactifs, en revêtement sur des corps moulés en résines synthétiques.

**2.** Utilisation selon la revendication 1, en revêtement sur des corps moulés en résines thermoplastiques.

**3.** Utilisation selon la revendication 1, en revêtement sur des corps moulés en résines duroplastiques.

**4.** Corps moulés revêtus en résines synthétiques, caractérisés en ce qu'ils portent en surface un revêtement d'une couche de 0,001 à 20 µm d'épaisseur de copolymère séquencé polyéther-polycarbonate de la revendication 1,

contenant jusqu'à 30 % en poids, par rapport au poids du copolymère séquence, d'agents tensioactifs.

**5.** Corps moulés revêtus en résines thermoplastiques selon la revendication 4.

**6.** Corps moulés revêtus en résines duroplastiques selon la revendication 4.

**7.** Utilisation selon les revendications 1 à 3, caractérisée en ce que les copolymères séquences du type polyéther-polycarbonate sont utilisés en combinaison avec des stabilisants.

**8.** Corps moulés revêtus selon les revendications 4 à 6, caractérisés en ce que la couche de copolymère séquencé polyéther-polycarbonate et d'agents tensioactifs contient en outre des stabilisants.

**9.** Procédé pour préparer les corps moulés revêtus des revendications 4 à 6 et 8, caractérisé en ce que l'on applique en revêtement sur les corps moulés en résines synthétiques une solution de copolymère séquencé polyéther-polycarbonate et d'agents tensioactifs et le cas échéant de stabilisants puis on évapore le solvant de manière connue.

**10.** Utilisation de polyéther-copolycarbonates aliphatiques-aromatiques segmentés ayant des poids moléculaires moyens, moyenne en poids Mw de 20 000 à 350 000 (détermination par la méthode de diffraction de la lumière à l'aide d'un photomètre à lumière diffractée) contenant 30 à 55 % en poids de motifs de structure de carbonates aromatiques de formule (I)

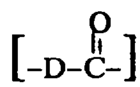 (I)

dans laquelle

D représente un radical de diphénol en $C_6$-$C_{30}$,
et 70 à 45 % en poids de motifs de structure de polyéther-carbonates aliphatiques de formule (II)

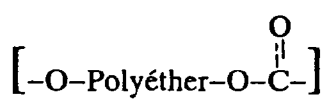 (II)

dans laquelle -O-polyéther-O- représente un radical de polyétherdiol aliphatique de poids moléculaire Mn 600 à 20 000,
et dans lesquels une partie, jusqu'à environ 8 % en poids, des radicaux de diphénolates -D- peuvent être remplacés par des radicaux d'(alkylène en $C_2$-$C_{15}$)diolates et/ou de (cycloalkylène en $C_5$-$C_6$)diolates,
et/ou dans lesquels une partie, jusqu'à environ 20 mol %, des radicaux de carbonates

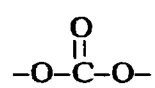

peuvent être remplacés par des radicaux de téréphtalate et/ou d'isophtalate,
et/ou dans lesquels une partie, jusqu'à environ 10 mol %, des radicaux de carbonates

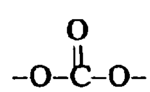

peuvent être remplacés par des radicaux d'(alkylène en $C_2$-$C_{15}$)-dicarboxylates et/ou de (cycloalkylène en $C_5$-$C_6$)dicarboxylates,
le cas échéant en combinaison avec des proportions allant jusqu'à 30 % du poids du copolymère séquencé, d'agents tensioactifs, en revêtement sur des corps moulés de résines synthétiques.

**11.** Utilisation selon la revendication 10, caractérisée en ce que les copolymères séquencés du type polyéther-polycarbonates sont utilisés en combinaison avec des stabilisants.

**12.** Corps moulés revêtus en résines synthétiques caractérisés en ce qu'ils portent en surface un revêtement d'une couche de 0,001 à 20 µm d'épaisseur d'un copolymère séquencé polyéther-polycarbonate de la revendication 10,

contenant le cas échéant jusqu'à 30 % en poids, par rapport au poids du copolymère séquencé, d'agents tensioactifs.

**13.** Corps moulés revêtus selon la revendication 12, caractérisés en ce que la couche de copolymère séquencé polyéther-polycarbonate contient en outre des stabilisants.

**14.** Corps moulés revêtus en résines thermoplastiques selon la revendication 12.

**15.** Procédé pour la fabrication des corps moulés de la revendication 14, caractérisé en ce que, à la fabrication des corps moulés en résines thermoplastiques, on revêt ces corps par les copolymères polyéther-polycarbonates par co-extrusion à des températures de 220 à 320°C.